# EUROPEAN PATENT APPLICATION

(11) **EP 3 654 313 A1**
(43) Date of publication of application: **20.05.2020**
(21) Application number: 19208364.0
(22) Date of filing: 11.11.2019
(51) Int. Cl.: G08G 5/00, G07C 5/00, B64D 45/00

(54) **SYSTEM AND METHOD FOR SAVING DATA TO A PORTABLE COMPUTING DEVICE**

(30) Priority: 16.11.2018 US 201816193249
(71) Applicant: Honeywell International Inc., Morris Plains, NJ 07950 (US)
(72) Inventor: WEST, Stewart, Morris Plains, NJ 07950 (US); VUONG, Tsz Lik Eric, Morris Plains, NJ 07950 (US); JUDD, Thomas D., Morris Plains, NJ 07950 (US); SHAMASUNDAR, Raghu, Morris Plains, NJ 07950 (US)
(74) Representative: Haseltine Lake Kempner LLP

(57) **Abstract**

Methods and systems are provided to save data from vehicle systems to a portable computing system. The method comprises: receiving a selection of information stored in at least one of: a communications management system, and at least one other vehicle system configured to be installed on a vehicle; receiving a selection to save the selected information with a portable computing system in the vehicle, where the portable computing system is configured to be removable from the vehicle; and sending the selected information to the portable computing system through a communications network, where the portable computing system is configured to save received, selected information in addition to or instead of sending the selected data to at least one of a printer in the vehicle and a storage device in the vehicle.

## Description

### BACKGROUND

Modern aircraft include printers to facilitate printing out archival copies of aircraft data and messages for document retention required by government aviation authorities and corporate policies. The acquisition, installation, supply, and maintenance costs of a printer in an aircraft is expensive. For example, printers for use in aircraft must be certified by aviation authorities which make the printers expensive. Further, the paper copies have limited lifetimes as ink fades, paper darkens over time, and the cost of cockpit printer paper is high. Also, the collection of such printouts by pilots is inefficient, and distracts them from their primary duties. Accordingly, there is a need for an alternative means to save such information, *e.g.* so that it can be latter viewed.

### SUMMARY

A method is provided. The method comprises: receiving a selection of information stored in at least one of: a communications management system, and at least one other vehicle system configured to be installed on a vehicle; receiving a selection to save the selected information with a portable computing system in the vehicle, where the portable computing system is configured to be removable from the vehicle; and sending the selected information to the portable computing system through a communications network, where the portable computing system is configured to save received, selected information in addition to or instead of sending the selected data to at least one of a printer in the vehicle and a storage device in the vehicle.

### BRIEF DESCRIPTION OF THE DRAWINGS

Understanding that the drawings depict only exemplary embodiments and are not therefore to be considered limiting in scope, the exemplary embodiments will be described with additional specificity and detail using the accompanying drawings, in which:
Figure 1 illustrates a block diagram of one embodiment of communications between a vehicle, and an operations center and/or a traffic control center;
Figure 2 illustrates a block diagram of one embodiment of a vehicle configured to store information on a portable computing system in addition to or in lieu of printing the information;
Figure 3 illustrates a block diagram of one embodiment of a communications management system;
Figure 4 illustrates a diagram of one embodiment of a method of saving information to a portable computing system; and
Figure 5 illustrates an exemplary embodiment of a display illustrating an option to save information to a portable computing device.

In accordance with common practice, the various described features are not drawn to scale but are drawn to emphasize specific features relevant to the exemplary embodiments. Reference characters denote like elements throughout figures and text.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding background and summary, or the following detailed description.

Embodiments facilitate the transfer of messages, reports, and data in a vehicle to a portable computing device in lieu of or in addition to printing such messages and data is provided. The messages may be a log of messages and/or the messages themselves sent by the vehicle or received from an operations center or a traffic control center. The data may be debug and/or trace execution data arising from a system error or failure, and/or maintenance data about one or more devices on the vehicle. The reports may include a post travel report that provides information about a trip made by the vehicle. The messages, reports, and/or data may be more generally referred to herein as information.

By saving such information to a portable computing system, the information is archived without the use of a printer. The portable computing system is configured to be used inside and outside of the vehicle. Thus, information saved to the portable computing system may subsequently be reviewed or otherwise analyzed on the portable computing system inside or outside of the vehicle. Further, the saved information may be transferred from the portable computing system to other computing system(s) (while the portable computing system is in or outside of the vehicle).

The portable computing system is not part (or a fixture) of the vehicle (although it may be electrically connected to, and possibly mechanically mounted in, the vehicle). The portable computing system may be, for example, a laptop computer, a tablet, phablet, smart phone, or any other type of portable computing device. The portable computing device may be used as an electronic flight bag (EFB), a cabin terminal, or a maintenance terminal.

For pedagogical purposes, a vehicle may be described hereinafter as an aircraft. However, it is understood that the teachings herein are applicable to other types of vehicles including without limitation space craft, ships, automobiles, buses, trains, and any other type of vehicle. Thus, a pilot of an aircraft is more generically referred to as an operator of a vehicle. An airline is more generically referred to as an owner (which may include a leasee) of a vehicle.

In one embodiment, messages and data are obtained from a variety of sources within and external to the vehicle. Messages may be sent by or to vehicle crew respectively to or by an operations center, *e.g.* an airline operations center (AOC) or an air traffic control center (ATCC). Messages may also be generated by vehicle systems, such as a central maintenance computer, and be sent to an operations center. Data may be entered by the vehicle crew, *e.g.* an alternate flight plan, or generated by other vehicle systems, e.g. vehicle equipment failure information from a vehicle maintenance computer, flight information from a flight management system, vehicle equipment condition information from an aircraft condition monitoring system, information about the environment, equipment, cabin contents and/or passengers in a cabin from a cabin terminal.

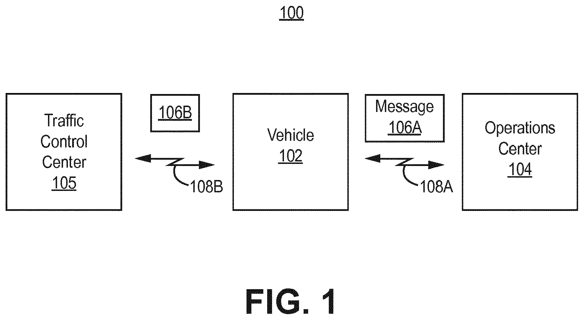

Figure 1 illustrates a block diagram of one embodiment of communications between a vehicle, and an operations center and/or a traffic control center (TCC) 100. Optionally, a first communications link 108A communicatively couples a vehicle 102 and an operations center 104. A first message 106 can be sent between the operations center 104 and the vehicle 102. Optionally, a second communications link 108B communicatively couples the vehicle 102 and a traffic control center 105. A second message 106B can be sent between the traffic control center 105 and the vehicle 102. Each of the first communications link 108A and the second communications link 108B may be a combination of one or more of an HF, VHF, satellite, cellular network, WiFi, WiMax, AeroMACS, and/or any other type of communications links.

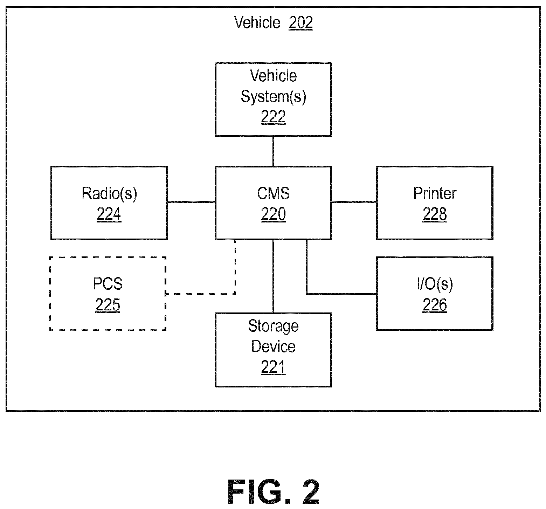

Figure 2 illustrates a block diagram of one embodiment of a vehicle 202 configured to store information on a portable computing system in addition to or in lieu of printing the information. The vehicle 202 comprises at least one vehicle system (vehicle system(s)) 222, at least one radio (radio(s)) 224, and at least one input / output device (I/O(s)) 226. The vehicle system(s) 222 may include a flight management system (used for vehicle navigation and control), a central maintenance computer (used to provide data about vehicle equipment, *e.g.* line replaceable units used throughout the vehicle), and/or any other systems in the vehicle 202. The various vehicle components described herein may be coupled to one or more of each other (*e.g.* by a bus such as a data bus) or may be coupled through a communications management system as illustrated in Figure 2. The radio(s) 224 include HF, VHF, satellite, cellular network, WiFi, WiMax, AeroMACS, and/or any other radio transceivers, *e.g.* used to form the communications links described herein. The I/O(s) 226 may include at least one display (display(s)) and/or data entry devices. The display(s) may include one or more of touch screen display(s), multifunction control and display unit(s) (MCDU(s)), and/or any other type of display(s). The data entry device(s) may include one or more of keyboard(s), pointing device(s) such as a mouse, and/or any other type of data entry device(s).

Optionally, the vehicle 202 includes a communications management system (CMS) 220 coupled to the at least one vehicle system 222. Vehicle system(s) 222 exclude the communications management system 220. Thus, vehicle system(s) 222 may also be referred to herein as "other vehicle systems".

Optionally, the vehicle 202 includes a printer 228, which is not part of the I/O(s) 226. The printer may be a thermal printer, a laser printer, an inkjet printer, or any other type of printer. Information, *e.g.* as described above, can be printed on a media (such as paper) with the printer 228. The printer 228 is configured to be mounted in and part of the vehicle 202 (although it may be removable for servicing or replacement).

Optionally, the vehicle 202 includes a storage device 221, which is not part of the I/O(s) 226. The storage device 221 may be magnetic storage media such as a hard drive, electronic storage media such as a solid state drive, optical storage media such as a DVD and optical drive, and/or any other type of storage media. The storage media is configured to be mounted in and part of the vehicle 202 (although it may be removable for servicing or replacement), and may be used to store data that is or may otherwise be printed on the printer 228.

Figure 2 also illustrates a portable computing system (PCS) 225. The portable computing system 225 is not a fixture of the vehicle 202, but may be readily placed and removed from the vehicle 202, *e.g.* by a vehicle crew member or a maintenance worker. The portable computing system 225 is communicatively coupled to the communications management system 220 or to another vehicle system by wired and/or wireless communications network which are typically in the vehicle 202. Because the portable computing system 225 can be removed from the vehicle, it may be possible, when the vehicle is not moving, that a wireless communications network linking the portable computing system 225 to vehicle components may be partially outside of the vehicle if the portable computing system 225 is located outside of the vehicle. The portable computing system 225 may or may not be temporarily mechanically affixed to the vehicle 202.

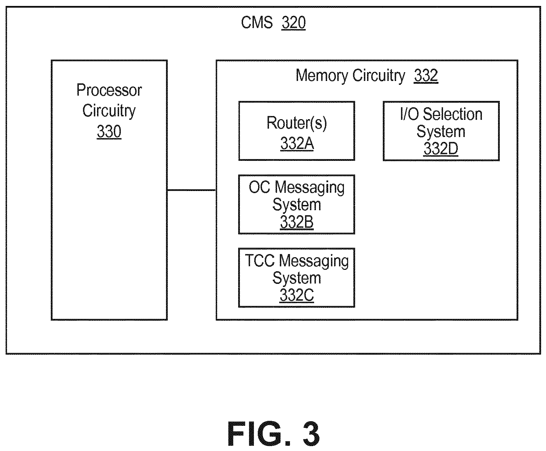

Figure 3 illustrates a block diagram of one embodiment of a communications management system 320. The illustrated communications management system comprises processor circuitry 330 coupled to memory circuitry 332. The illustrated memory circuitry 332 comprises at least one router (router(s)) 332A, an operations center (OC) messaging system 332B, a traffic control center (TCC) messaging system 332C, and an I/O selection system 332D. When the vehicle 202 is an aircraft, the operations center messaging system 332B may be an airline operations center and the traffic control center 332C may be an airline traffic control center. The at least one router (router(s)) 332A, the operations control (OC) messaging system 332B, the traffic control center (TCC) messaging system 332C, and the I/O selection system 332D are executed by the processor circuitry 330.

The router(s) 332A are configured to route information between (a) vehicle system(s) 222, the operations control messaging system 332B, and the traffic control center messaging system 332C, and (b) the radio(s) 224. The operations control messaging system 332B, and the traffic control center messaging system 332C may be or include software applications. The operations center messaging system 332B is configured to send, and receive messages from an operations center, *e.g.* an airline operations center; the operations center messaging system 332B also facilitates displaying such messages. The traffic control center messaging system 332C is configured to send and receive messages from a traffic control center, *e.g.* an air traffic control center; the traffic control center messaging system 332C also facilitates displaying such messages.

The operations control messaging system 332B and the traffic control center messaging system 332C may not be in the communications management system, and/or other operations control messaging systems and other traffic control center messaging systems may be located in other vehicle system(s), such as the flight management system. Further, messages can be routed, *e.g.* by the router(s) 332A, between (*e.g.* from) at least one of the vehicle system(s) 222 (*e.g.* a flight management system) and (*e.g.* to) an operations center and/or a traffic control center.

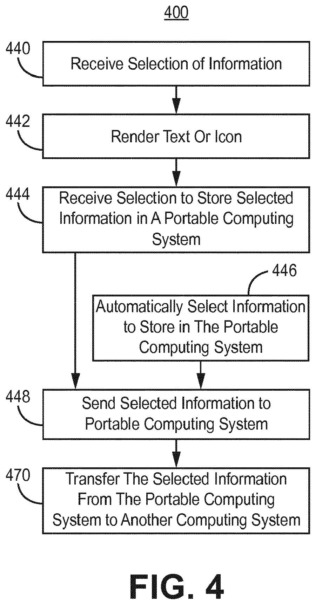

The I/O selection system 332D is configured, e.g. using the I/O(s) 226, to perform one or more of blocks 440 through 448 described with respect to Figure 4. Figure 4 illustrates a diagram of one embodiment of a method of saving information to a portable computing system 400. To the extent that the method 400 shown in Figure 4 is described herein as being implemented in the systems shown in Figures 1-3, it is to be understood that other embodiments can be implemented in other ways. The blocks of the flow diagrams have been arranged in a generally sequential manner for ease of explanation; however, it is to be understood that this arrangement is merely exemplary, and it should be recognized that the processing associated with the methods (and the blocks shown in the Figures) can occur in a different order (for example, where at least some of the processing associated with the blocks is performed in parallel and/or in an event-driven manner).

Optionally, in block 440, receive a selection, *e.g.* from a vehicle crew member or another using the I/O(s), of information, *e.g.* to electronically transfer information to a portable computing system in the vehicle and which is configured to be removable from the vehicle. Such information stored in at least one of a communications management system, or at least one of the vehicle system(s) configured to be installed on a vehicle.

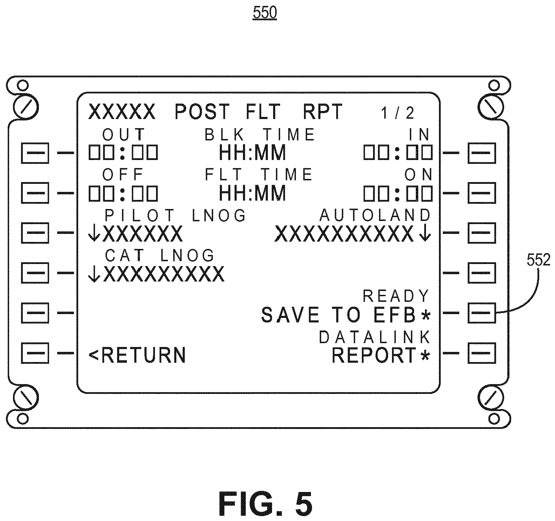

Optionally, in block 442, render text or an icon, *e.g.* on a display, indicating an option to electronically save such information. Figure 5 illustrates an exemplary embodiment of a display illustrating an option to save information to a portable computing device 500. The display unit 550 illustrated in Figure 5 is, for example, a MCDU.

Returning to Figure 4, then proceed to block 444. Optionally, in block 444, receive, *e.g.* from a vehicle crew member, a selection to save the selected information to be stored in a portable computing system. Returning to Figure 5, the selection may be made by a crew member by actuating an actuator 552, *e.g.* a button switch, adjacent to the rendered text "SAVE TO EFB". EFB is an acronym for electronic flight bag which is one example of a portable computing system. For purposes of clarity, alternative labels may be used in lieu of "SAVE TO EFB". Further, the actuator need not be a physical actuator such as a switch; for example, it may be a region on a touch screen. Returning to Figure 4, upon performing block 444, proceed to block 448.

Optionally, in block 446, automatically select information stored in the communications management system, or the at least one of the vehicle system(s) configured to be installed on a vehicle, to be stored in the portable computing system. Then proceed to block 448.

In block 448, send the selected information, *e.g.* from or through a communications management system or from the other the other vehicle system (bypassing the communications management system), to a portable computing system through a communications network, where the portable computing system is configured to save received, selected information in addition to or instead of sending the selected data to at least one of a printer in the vehicle and a storage device in the vehicle. Upon receipt of such information, the portable computing system is configured to save the data to memory in or attached to the portable computing system.

Optionally, in block 470, send at least a portion of the selected information from the portable computing system to another computing system, *e.g.* a server system or a cloud computing system, that is outside, *i.e.* not located in, the vehicle. The selected information can be reviewed and/or analyzed on the portable computing system and/or the other computing system.

The processor circuitry described herein may include one or more microprocessors, microcontrollers, digital signal processing (DSP) elements, application-specific integrated circuits (ASICs), complex programmable logic devices, and/or field programmable gate arrays (FPGAs). In this exemplary embodiment, processor circuitry includes or functions with software programs, firmware, or other computer readable instructions for carrying out various process tasks, calculations, and control functions, used in the methods described herein. These instructions are typically tangibly embodied on any storage media (or computer readable medium) used for storage of computer readable instructions or data structures. The memory circuitry described herein can be implemented with any available storage media (or computer readable media) that can be accessed by a general purpose or special purpose computer or processor, or any programmable logic device. Suitable computer readable medium may include storage or memory media such as semiconductor, magnetic, and/or optical media. For example, computer readable media may include conventional hard disks, Compact Disk - Read Only Memory (CD-ROM), DVDs, volatile or non-volatile media such as Random Access Memory (RAM) (including, but not limited to, Dynamic Random Access Memory (DRAM)), Read Only Memory (ROM), Electrically Erasable Programmable ROM (EEPROM), and/or flash memory. Combinations of the above are also included within the scope of computer readable media.

### EXAMPLE EMBODIMENTS

A method comprising: receiving a selection of information stored in at least one of: a communications management system, and at least one other vehicle system configured to be installed on a vehicle; receiving a selection to save the selected information with a portable computing system in the vehicle, where the portable computing system is configured to be removable from the vehicle; and sending the selected information to the portable computing system through a communications network, where the portable computing system is configured to save received, selected information in addition to or instead of sending the selected data to at least one of a printer in the vehicle and a storage device in the vehicle.

Example 2 includes the method of Example 1, wherein the selected information was selected by a crew member of the vehicle.

Example 3 includes the method of any of Examples 1-2, wherein the information comprises at least one of messages, reports, and data.

Example 4 includes the method of any of Examples 1-3, wherein the portable computing system comprises one of a laptop computer, a tablet, phablet, and a smart phone.

Example 5 includes the method of any of Examples 1-4, wherein the at least one other vehicle system comprises at least one of a flight management system, aircraft condition monitoring system, a cabin terminal, and a central maintenance computer.

Example 6 includes the method of any of Examples 1-5, further comprising rendering text or an icon on a display indicating an option to electronically save the information.

Example 7 includes the method of any of Examples 1-6, further comprising sending at least a portion of the received, selected information from the portable computing system to another computing system outside of the vehicle.

A program product comprising a non-transitory processor readable medium on which program instructions are embodied, wherein the program instructions are configured, when executed by at least one programmable processor, to cause the at least one programmable processor to: receive a selection of information stored in at least one of: a communications management system, and at least one other vehicle system configured to be installed on a vehicle; receive a selection to save the selected information with a portable computing system in the vehicle, where the portable computing system is configured to be removable from the vehicle; and send the selected information to the portable computing system through a communications network, where the portable computing system is configured to save received, selected information in addition to or instead of sending the selected data to at least one of a printer in the vehicle and a storage device in the vehicle.

Example 9 includes the program product of Example 8, wherein the selected information was selected by a crew member of the vehicle.

Example 10 includes the program product of any of Examples 8-9, wherein the information comprises at least one of messages, reports, and data.

Example 11 includes the program product of any of Examples 8-10, wherein the portable computing system comprises one of a laptop computer, a tablet, phablet, and a smart phone.

Example 12 includes the program product of any of Examples 8-11, wherein the program instructions are configured, when executed by the at least one programmable processor, to further cause the at least one programmable processor to render text or an icon on a display indicating an option to electronically save the information.

Example 13 includes the program product of any of Examples 8-12, wherein the program instructions are configured, when executed by the at least one programmable processor to further cause the at least one programmable processor to send at least a portion of the received, selected information from the portable computing system to another computing system outside of the vehicle.

A system configured to be installed in a vehicle, the system comprising: a communications management system; at least one vehicle system communicatively coupled to the communications management system; at least one radio communicatively coupled to the communications management system; at least one input / output device communicatively coupled to the communications management system; wherein the communications management system comprises processor circuitry coupled to memory circuitry; wherein the communications management system is configured to: receive a selection of information stored in at least one of: a communications management system, or at least one other vehicle system; receive a selection to save the selected information with a portable computing system in the vehicle, where the portable computing system is configured to be removable from the vehicle; and send the selected information to the portable computing system through a communications network, where the portable computing system is configured to save received, selected information in addition to or instead of sending the selected data to at least one of a printer in the vehicle and a storage device mounted in the vehicle.

Example 15 includes the system of any of Example 14, wherein the selected information was selected by a crew member of the vehicle.

Example 16 includes the system of any of Examples 14-15, wherein the information comprises at least one of messages, reports, and data.

Example 17 includes the system of any of Examples 14-16, wherein the portable computing system comprises one of a laptop computer, a tablet, phablet, and a smart phone.

Example 18 includes the system of any of Examples 14-17, wherein the at least one other vehicle system comprises at least one of a flight management system, aircraft condition monitoring system, a cabin terminal, and a central maintenance computer.

Example 19 includes the system of any of Examples 14-18, wherein the communications management system is further configured to render text or an icon on a display indicating an option to electronically save the information.

Example 20 includes system of any of Examples 14-19, wherein the memory circuitry comprises: at least one router; an operations center messaging system; a traffic control center messaging system; and an input / output selection system.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A method comprising:
receiving a selection of information stored in at least one of: a communications management system, and at least one other vehicle system configured to be installed on a vehicle (440);
receiving a selection to save the selected information with a portable computing system in the vehicle, where the portable computing system is configured to be removable from the vehicle (444); and
sending the selected information to the portable computing system through a communications network, where the portable computing system is configured to save received, selected information in addition to or instead of sending the selected data to at least one of a printer in the vehicle and a storage device in the vehicle (448).

2. The method of claim 1, wherein the information comprises at least one of messages, reports, and data.

3. The method of claim 1, wherein the portable computing system comprises one of a laptop computer, a tablet, phablet, and a smart phone.

4. The method of claim 1, wherein the at least one other vehicle system comprises at least one of a flight management system, aircraft condition monitoring system, a cabin terminal, and a central maintenance computer.

5. The method of claim 1, further comprising sending at least a portion of the received, selected information from the portable computing system to another computing system outside of the vehicle (470).

6. A system configured to be installed in a vehicle, the system comprising:
a communications management system (220);
at least one vehicle system (222) communicatively coupled to the communications management system;
at least one radio (224) communicatively coupled to the communications management system;
at least one input / output device (226) communicatively coupled to the communications management system;
wherein the communications management system comprises processor circuitry (330) coupled to memory circuitry (332);
wherein the communications management system is configured to:
receive a selection of information stored in at least one of: a communications management system, or at least one other vehicle system (440);
receive a selection to save the selected information with a portable computing system in the vehicle, where the portable computing system is configured to be removable from the vehicle (444); and
send the selected information to the portable computing system through a communications network, where the portable computing system is configured to save received, selected information in addition to or instead of sending the selected data to at least one of a printer in the vehicle and a storage device mounted in the vehicle (448).

7. The system of claim 6, wherein the information comprises at least one of messages, reports, and data.

8. The system of claim 6, wherein the information comprises at least one of messages, reports, and data.

9. The system of claim 6, wherein the portable computing system comprises one of a laptop computer, a tablet, phablet, and a smart phone.

10. The system of claim 6, wherein the at least one other vehicle system comprises at least one of a flight management system, aircraft condition monitoring system, a cabin terminal, and a central maintenance computer.
